# FASCICULE DE BREVET EUROPEEN

(11) **EP 0 388 249 B1**
(45) Date de publication et mention de la délivrance du brevet: **06.07.1994**
(21) Numéro de dépôt: 90400473.6
(22) Date de dépôt: 21.02.1990
(51) Int. Cl.: C03B 40/02, C03B 23/035, C03B 23/023, C03B 23/03, C03B 23/025, C03B 35/20, C03B 35/24

(54) **Dispositif servant au transport et/ou à la mise en forme de feuilles de verre chauffées à leur température de ramollissement**
Vorrichtung zum Transportieren und/oder Formen von Glasscheiben auf Erweichungstemperatur
Apparatus for transporting and/or forming of glass sheets heated to their softening temperature

(30) Priorité: 16.03.1989 DE 3908642
(43) Date de publication de la demande: 19.09.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Vanaschen, Luc, B-4700 Eupen (BE); Kuster, Hans-Werner, D-5100 Aachen (DE); Havenith, Hubert, D-5102 Würselen (DE); D'Iribarne, Benoit, D-5100 Aachen (DE); Gebhardt, Franz, Dr., D-5102 Würselen (DE)
(74) Mandataire: Menes, Catherine

(56) Documents cités:
- WO-A-85/00162
- DE-A- 3 908 643
- FR-A- 2 606 398
- GB-A- 2 168 339
- US-A- 3 586 493
- US-A- 3 994 703
- US-A- 4 579 577
- US-H- 480

## Description

L'invention concerne un dispositif, servant au transport et/ou à la mise en forme de feuilles de verre chauffées à leur température de ramollissement, dont la surface venant en contact avec les feuilles de verre est revêtue d'un matériau céramique et/ou d'une couche d'un matériau fibreux réfractaire revêtue d'un matériau céramique. L'invention s'applique notamment aux traitements à chaud de feuilles de verre comportant des parties émaillées.

Le problème des outillages utilisés pour transporter et/ou mettre en forme des feuilles de verre chauffées à leur température de ramollissement est un problème particulièrement important de la solution duquel dépend la qualité finale des vitrages. La feuille de verre ne doit pas être refroidie inconsidérément lors de son contact avec l'outil. Elle ne doit pas non plus être marquée par un outil insuffisamment lisse ni collée à cet outil, même lorsqu'elle comporte des parties émaillées. Par ailleurs, le transformateur a bien évidemment intérêt à disposer d'outils peu onéreux - ce qui conduit à préférer les formes de bombage en acier réfractaire aux formes de bombage en céramique réfractaire - et dont les pièces d'usures ne sont pas à remplacer trop fréquemment, notamment de manière à limiter les arrêts de production.

Dans le brevet américain US-A-3 586 493, il est proposé des formes de bombage en acier revêtues d'une couche de surfaçage dure à base de zircone, de zirconate de magnésium, d'oxyde d'aluminium, d'oxyde de béryllium ou d'oxyde de chrome, déposée de préférence par pulvérisation à la flamme. Cette couche de surfaçage d'une grande durabilité limite le refroidissement de la feuille de verre lors du contact avec la surface de la forme, ceci en raison de la très faible conductivité thermique de la couche de surfaçage.

Il a été également proposé dans la publication US-H-480 de revêtir une forme de bombage en acier avec une couche d'un carbure métallique, notamment d'un carbure de tungstène, une couche de nitrure de bore pouvant éventuellement être déposée sur cette couche de carbure métallique.

Par ailleurs, on a également décrit de nombreuses couches de matériaux fibreux réfractaires. De la demande de brevet allemand DE-A-1807272, il est connu un revêtement constitué par un feutre en fibres d'alumino-silicate - qui assure l'isolation thermique - et par une couche de revêtement dure et lisse formée de silice colloïdale mélangée à de la poudre de quartz - cette couche assurant la résistance à la chaleur et à l'abrasion.

Le brevet allemand DE-A-15 96 515 décrit un dispositif de bombage de feuilles de verre dont la surface venant en contact avec les feuilles de verre est munie d'un revêtement poreux en fibres métalliques feutrées. Les fibres métalliques sont en bronze, cuivre ou acier inoxydable et ce revêtement doit présenter un effet isolant amélioré.

La tendance actuelle est aux vitrages automobiles dont une face comporte une partie émaillée fonctionnelle ou décorative. La cuisson des émaux est effectuée lors du processus de bombage ; ces émaux sont constitués par des compositions à base d'une fritte à bas point de fusion et de pigments colorés du type oxydes métalliques et sont donc à l'état fondus lorsque le verre est chauffé au-delà de son point de ramollissement. Le plus souvent, on cherche à réaliser à la périphérie du vitrage une sorte de cadre qui masque la colle et la protège du rayonnement ultra-violet lorsque le vitrage est fixé par collage sur la carrosserie du véhicule automobile.

La plupart des procédés de production rendent inévitables les contacts entre les outils de transport et/ou de bombage et les parties émaillées du vitrage, lors du transport et du bombage de la feuille de verre. Ceci est par exemple le cas lorsque la feuille de verre est mise en forme au moyen d'une presse de bombage. Même si le bombage s'effectue en position horizontale au moyen d'un cadre de bombage ouvert en son centre sur lequel la feuille de verre s'affaisse sous l'effet de son propre poids, la face émaillée de la feuille de verre étant tournée vers le haut, on ne peut éviter que cette face émaillée ne touche un outil de bombage. En effet, dans ce cas la feuille de verre est manipulée par sa face supérieure par une plaque aspirante, en règle générale constituée par une plaque munie de trous d'aspiration, qui saisit la feuille de verre dans le four et la dépose sur le cadre de bombage.

Les revêtements acutels disponibles destinés aux outils de bombage et/ou de transport venant en contact avec des feuilles de verre échauffées à leur température de bombage ne sont pas satisfaisants, dès lors que la feuille de verre à bomber et/ou à tremper thermiquement comporte au moins une face partiellement émaillée, les émaux étant fondus aux températures nécessaires pour ces opérations, de sorte qu'il y a un danger particulièrement grand de voir ces émaux fondus mouiller la surface de contact des outils et y coller ce qui bien évidemment nuit au bon déroulement de l'opération de bombage et/ou de trempe.

L'invention vise à procurer de nouveaux revêtements aux propriétés améliorées destinées notamment au recouvrement des surfaces de contact avec des feuilles de verre chauffées à leur température de bombage et d'outils servant à leur transport et/ou à leur bombage. Ces revêtements doivent, notamment, exclure tout risque d'endommagement mécanique de la feuille de verre ramollie et présenter une très faible mouillabilité et corollairement une très faible adhésivité au verre ramolli et au verre fondu, de sorte qu'un contact direct avec des émaux fondus soit possible sans effet préjudiciable à la qualité des vitrages.

Selon l'invention, la surface venant en contact avec les feuilles de verre chauffées à leur température de ramollissement d'un dispositif servant au transport et/ou à la mise en forme de feuilles de verre est revêtue d'un matériau céramique ou d'une couche d'un matériau fibreux réfractaire revêtue d'un matériau céramique, ledit matériau céramique étant essentiellement choisi parmi le groupe des céramiques constitué par l'oxynitrure d'aluminium, l'oxynitrure de silicium et d'aluminium, le titanate d'aluminium et les zircones pour le cas du revêtement d'une couche d'un matériau fibreux réfractaire et pour le cas d'un revêtement direct parmi le groupe constitué par l'oxynitrure d'aluminium, l'oxynitrure de silicium et d'aluminium et le titanate d'aluminium. L'éventuelle couche de matériau fibreux réfractaire est formée par un tissu, tricot ou matériau feutré en fibres métalliques dont le diamètre est compris entre 5 et 50 microns.

Les matériaux céramiques employés selon l'invention ont pour caractéristique une adhésivité et une mouillabilité très faibles envers le verre ramolli ou fondu, de sorte qu'ils montrent un bon comportement par rapport aux émaux fondus.

Ils peuvent être utilisés pour le recouvrement des surfaces de contact des formes de bombage ou des plaques aspirantes telles que celles utilisées pour le transfert de feuilles de verre du four de réchauffage à la station de bombage ou même de rouleaux en acier ou en matériau céramique utilisés pour le convoyage du verre par exemple dans le four.

L'épaisseur de matériau céramique n'est pas fondamentalement critique, il importe toutefois qu'elle soit suffisante pour que la couche ne présente pas de discontinuité, ce qui est généralement assuré à partir d'une épaisseur de plus de 50 microns. D'autre part, des couches épaisses ne sont pas recommandées, car trop cassantes, surtout si elles sont déposées directement sur un outil métallique ayant un coefficient de dilatation beaucoup plus élevé que celui des matériaux céramiques et dont la dilatation ne peut pas alors être compensée par la déformation élastique du matériau, contrairement au cas d'un revêtement fibreux. En pratique, on utilise des couches de moins de 300 microns d'épaisseur et de préférence de moins de 100 microns pour un revêtement direct.

La couche de revêtement céramique peut être obtenue par un procédé de dépôt par pulvérisation à la flamme ou mieux par un procédé de dépôt par pulvérisation sous plasma ou encore par d'autres procédés connus de céramisation. Un traitement complémentaire de polissage ou de ponçage n'est généralement pas requis, sauf dans le cas extrême d'une couche céramique déposée directement sur la surface manifestement défectueuse.

Il peut être avantageux de prévoir une sous-couche d'accrochage de la couche de matériau céramique, par exemple à base d'un alliage nickel-aluminium ou nickel-chrome-aluminium, cette couche d'accrochage étant elle-même déposée par le procédé de pulvérisation à la flamme ou le procédé de pulvérisation sous plasma. L'épaisseur de la couche d'accrochage est de préférence comprise entre 50 et 200 microns.

Le revêtement direct d'un outil de transport et/ou de bombage constitue la forme de réalisation la plus avantageuse en raison de la très grande durabilité d'une couche céramique. Toutefois, la grande dureté et la surface granulée d'une couche céramique peuvent entraîner un marquage de la surface du verre, dû dans ce cas essentiellement à un phénomène mécanique, les émaux fondus ne mouillant ni ne collant à l'outil revêtu. Un tel marquage est exclu lorsque cette couche céramique dure est déposée sur un matériau fibreux élastique, flexible, car aux endroits où les grains exercent une pression maximale, cette dernière peut être compensée par la flexion du matériau fibreux ce qui conduit à une uniformisation de la charge supportée par la surface de la feuille de verre.

La porosité et l'épaisseur de ce matériau fibreux du type tissu, tricot ou feutre doivent être choisies de manière à bien atteindre cet effet d'uniformisation des contraintes, c'est pourquoi on utilise de préférence des tissus, tricots ou feutres dont la porosité est supérieure à 60 % ou mieux encore supérieure à 80 %. Du point de vue des propriétés requises d'isolation thermique, il est par ailleurs préférables d'utiliser un matériau qui présente, dans une direction perpendiculaire à son plan de dilatation, une résistance thermique supérieure ou égale à 10⁻³ m².K.W⁻¹.

D'une manière totalement inattendue, surtout en considération du caractère relativement fragile et cassant des couches en oxynitrure d'aluminium, titanate d'aluminium, oxynitrure d'aluminium et de silicium ou zircone, on constate que les tissus, tricots ou feutres revêtus selon l'invention ont une durabilité bien supérieure aux mêmes tissus, tricots ou feutres non revêtus.

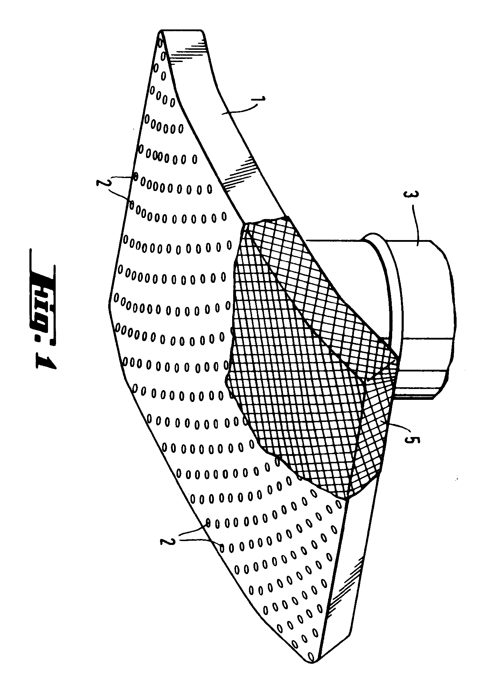

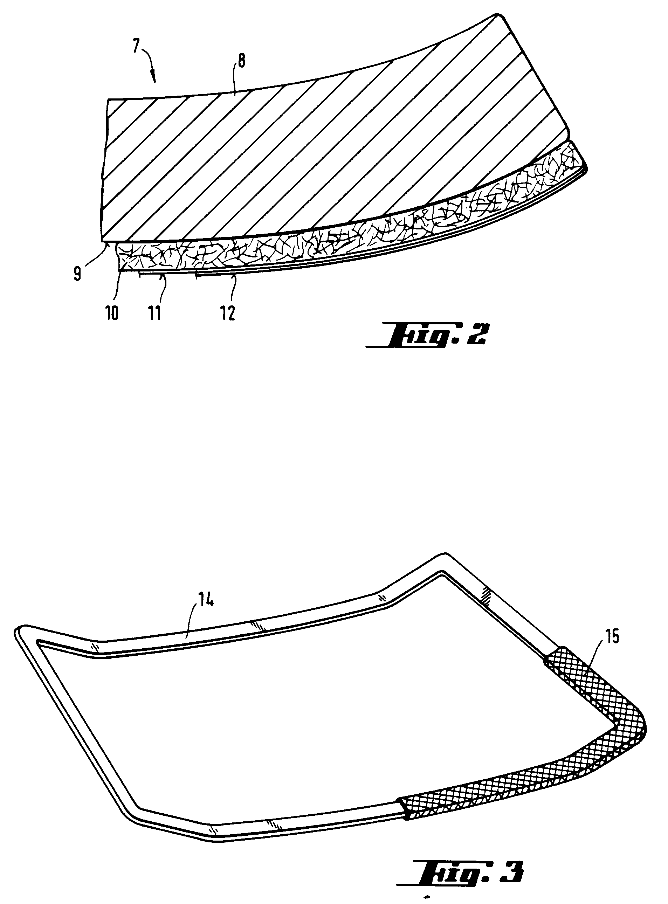

D'autres détails et caractéristiques avantageuses de l'invention ressortent de la description d'outils de bombage et/ou de transport selon l'invention, faite en référence aux dessins annexes qui représentent :
. **figure 1** : une forme de bombage aspirante convexe recouverte par un tissu à mailles revêtu d'une couche céramique,
. **figure 2** : une forme de bombage pleine convexe revêtue d'un matériau feutré revêtu d'une couche céramique,
. **figure 3** : un cadre de bombage entouré d'un tricot en fibres métalliques revêtu d'une couche céramique.

L'outil représenté figure 3, est une plaque aspirante 1 ayant une surface légèrement convexe. La plaque aspirante 1 est en métal ou en céramique et est munie d'une série d'orifices 2 en connexion avec un conduit 3 relié à une pompe à vide 4. Par effet de succion dû à la dépression créée par la pompe, la feuille de verre est aspirée et plaquée contre la surface de la plaque aspirante dont elle acquiert la courbure qui peut être identique à l'état final souhaité, si l'on souhaite obtenir une forme simple, c'est-à-dire relativement peu bombée. Une telle plaque aspirante 1 peut également être utilisée pour préformer une feuille de verre avant une seconde étape de bombage dans laquelle la feuille de verre va acquérir sa forme définitive. A la limite, la plaque aspirante 1 peut être plane et ne servir alors qu'au transport des feuilles de verre entre le four de réchauffage et l'outil de bombage proprement dit, qui est par exemple constitué par un cadre de bombage.

Selon un premier exemple de réalisation de l'invention, la plaque aspirante 1 est revêtue d'une couche céramique à base d'oxynitrure d'aluminium, d'oxynitrure d'aluminium et de silicium ou de titanate d'aluminium, du moins pour ce qui concerne la partie de sa surface venant en contact avec des zones émaillées correspondant au décor sérigraphié sur la feuille de verre. Pour le reste de la surface, on peut utiliser de façon usuelle une feuille de papier en fibre céramique qui peut elle-même être revêtue d'une couche céramique selon l'invention.

Selon une seconde variante, plus spécialement préférée de l'invention, on entoile la plaque aspirante 1 avec un tricot ou tissu à mailles 5, fait de fibres en alliage fer-nickel-chrome. Les fibres élémentaires de ce tissu ou tricot 5 ont un diamètre inférieur à 50 microns et de préférence compris entre 5 et 30 microns, elles sont retordues en fils tricotés ou tissés de manière à former des mailles de 4 à 100 mm². L'épaisseur du tissu ou tricot est de préférence comprise entre 0,1 et 2 mm. Les fils formant le tissu ou tricot présentent une grande porosité due à l'inclusion d'air entre les fibres élémentaires et de ce fait le tissu ou tricot a une certaine compressibilité élastique perpendiculairement à son plan de dilatation. Dans cette direction perpendiculaire au plan de dilatation, la conductivité thermique du tissu ou tricot doit être inférieure à 3 W.m⁻¹.K⁻¹ et de préférence à 0,2 W.m⁻¹.K⁻¹ ce qui correspond à une résistance thermique comprise entre 10⁻³ et 50 10⁻³ m².K.W⁻¹.

L'entoilage réalisé par la technique de pulvérisation sous plasma on dépose sur le tissu ou tricot une fine couche de titanate d'aluminium (Al₂0₃-Ti0₂, nom commercial TIALIT). Ce dépôt peut être simplement dirigé en direction des zones devant effectivement entrées en contact avec des parties émaillées des feuilles de verre. Avec une plaque aspirante 1 ainsi revêtue, on n'observe ni collage des émaux fondus, ni marquage ou détérioration mécanique des parties émaillées ou non émaillées de la feuilles de verre.

D'aussi bons résultats sont obtenus avec un dépôt d'oxynitrure d'aluminium dont la formulation approximative est 5 AlN-9 Al₂0₃) et qui est commercialisé sous la dénomination ALON. Ce dépôt a été également effectué par pulvérisation sous plasma, avec une épaisseur de la couche d'environ 50 à 300 microns.

La figure 2 est une vue en coupe d'une forme de bombage pleine convexe 7 constituant par exemple la forme mâle d'une presse de bombage où la forme de bombage d'un dispositif de bombage par pressage du verre au moyen d'un courant ascendant d'air chaud tel que décrit dans le brevet EP-B-169 770.

La forme de bombage 7 est constituée par une plaque métallique 8 dont la face inférieure correspondant à la forme souhaitée est revêtue d'un matelas feutré 10 de 2 à 4 mm d'épaisseur, fait en fibres métalliques frittées et fixé à la plaque 8 par une colle idoine. Les fibres métalliques sont par exemple en un alliage nickel-chrome à 80 % de nickel et 20 % de chrome. Elles ont un diamètre compris entre 8 et 20 microns. La porosité du feutre est de plus de 60 % et de préférence de plus de 80 %, le grammage du feutre est de préférence voisin de 500 g/m².

Sur ce matelas 10, on dépose par pulvérisation sous plasma une sous-couche 11 d'une épaisseur d'environ 100 microns, faite d'un alliage nickel-aluminium ou nickel-chrome-aluminium. Cette sous-couche 11 améliore la tenue de la couche céramique 12 qui est déposée de même par pulvérisation sous plasma. Dans cet exemple, on a déposé une couche de 100 microns d'oxynitrure d'aluminium et de silicium, également connu sous la dénomination commerciale SIALON et dont la formule chimique correspond à Si₃Al₂0₃N₄ ou Si₃Al₃0₅N₅.

Comme représenté figure 3, le dispositif selon l'invention peut également être un cadre de bombage 14 entouré d'un tissu revêtu et isolant thermiquement 15. La forme et le contour du cadre de bombage 14 correspondent à la forme prévue pour la feuille de verre à bomber. Ce cadre de bombage peut être utilisé seul - pour un bombage par inertie et gravité ou comme contre-forme d'une presse de bombage en deux parties.

Comme précédemment, le tissu 15 se compose de fils en fibres élémentaires de 8 à 12 microns d'épaisseur en alliage nickel-chrome, ces autres caractéristiques et propriétés thermiques correspondent à celles du tissu ou tricot 5 décrit en référence à la figure 1.

Le tissu 15 a été revêtu d'une couche de zircone stabilisée (Zr0₂), d'une épaisseur d'environ 80 microns, déposée par pulvérisation à la flamme ou par pulvérisation sous plasma. La zircone stabilisée contient une faible quantité d'oxyde de calcium, d'oxyde de magnésium ou d'oxyde d'yttrium, ces additifs évitant une transformation de phase de la zircone aux températures de travail.

Comme dans les cas précédemment décrits, on n'observe pas dans la couche céramique de transformation cristalline, même après une longue durée d'utilisation à une température d'environ 650°C et dans une atmosphère oxydante. La couche céramique n'adhère ni au verre ni aux émaux fondus et ne réagit pas avec ceux-ci. Même après une longue durée d'utilisation, la couche céramique laisse encore l'outil revêtu en parfait état d'utilisation.

## Revendications

1. Dispositif (1, 8, 14) servant au transport et/ou à la mise en forme de feuilles de verre chauffées à leur température de ramollissement, dont la surface venant en contact avec les feuilles de verre est revêtue directement d'un matériau céramique ou d'une couche d'un matériau fibreux réfractaire (5, 10, 15) revêtue d'un matériau céramique, **caractérisé en ce que** le matériau céramique est essentiellement choisi parmi le groupe de céramique constitué par l'oxynitrure d'aluminium, l'oxynitrure de silicium et d'aluminium, le titanate d'aluminium et les zircones, pour le cas d'un revêtement d'une couche d'un matériau fibreux réfractaire et pour le cas d'un revêtement direct parmi le groupe constitué par l'oxynitrure d'aluminium, l'oxynitrure de silicium et d'aluminium et le titanate d'aluminium et **en ce que** ladite couche de matériau fibreux réfractaire est formée d'un tissu (5, 15), tricot ou matériau feutré (10) en fibres métalliques ayant un diamètre compris entre 5 et 50 microns.

2. Dispositif suivant la revendication 1, **caractérisé** **en ce que** le tissu (5, 15), tricot ou matériau feutré (10) est constitué de fibres en alliage fer-nickel-chrome.

3. Dispositif suivant la revendication 1, **caractérisé** **en ce que** le tissu (5, 15), tricot ou matériau feutré (10) est constitué de fibres en alliage nickel-chrome.

4. Dispositif suivant l'une des revendications précédentes, **caractérisé en ce que** la couche de matériau fibreux (5, 10, 15) présente, dans une direction perpendiculaire à son plan de dilatation, une résistance thermique supérieure ou égale à 10⁻³ m².K.W⁻¹.

5. Dispositif suivant l'une des revendications précédentes, **caractérisé en ce que** le matériau feutré (10) se compose de fibres métalliques frittées et présente une porosité de plus de 60 % et de préférence de plus de 80 %.

6. Dispositif suivant l'une des revendications précédentes, **caractérisé en** ce que ledit revêtement de matériau céramique a une épaisseur comprise entre 50 et 300 microns, et de préférence entre 50 et 100 microns si elle n'est pas déposée sur une couche d'un matériau fibreux réfractaire.

7. Dispositif suivant l'une des revendications précédentes, **caractérisé en** ce que ledit revêtement en matériau céramique est déposé par un procédé de pulvérisation sous plasma ou un procédé de pulvérisation à la flamme.

8. Dispositif suivant l'une des revendications précédentes, **caractérisé par** un revêtement en zircone stabilisée par le l'oxyde de magnésium, de l'oxyde de calcium ou de l'oxyde d'yttrium.

9. Dispositif suivant l'une des revendications précédentes, **caractérisé en ce que** ladite couche en matériau céramique est déposée sur une sous-couche dans un alliage nickel-aluminium ou nickel-chrome-aluminium.

10. Dispositif suivant l'une des revendications précédentes, **caractérisé** en **ce** que seules les parties de l'outillage venant en contact avec une partie émaillée de la feuille de verre sont revêtues de ladite couche de matériau céramique.

11. Dispositif suivant la revendication 10, **caractérisé** **en ce que** les parties de l'outillage non revêtues de ladite couche de matériau céramique sont recouvertes par un papier en fibres céramiques.

12. Application du dispositif suivant l'une des revendications 1 à 11 au transport et/ou à la mise en forme de feuilles de verre présentant une partie émaillée venant au contact dudit dispositif.

## Patentansprüche

1. Vorrichtung (1,8,14) zum Transport und/oder zum Verformen von auf Erweichungstemperatur erhitzten Glasscheiben, deren mit den Glasscheiben in Berührung kommende Oberfläche entweder unmittelbar mit einem keramischen Material oder mit einer ihrerseits mit einem keramischen Material überzogenen Schicht aus hitzebeständigen Fasern (5,10,15) versehen ist, **dadurch gekennzeichnet**, daß für den Überzug für eine Schicht aus hitzebeständigem Fasermaterial das keramische Material im wesentlichen aus den Keramiken ausgewählt ist, die aus Aluminiumoxinitrid, Siliziumaluminiumoxinitrid, Aluminiumtitanat und Zirkonoxid bestehen, und daß für die unmittelbare Beschichtung das keramische Material aus den Keramiken ausgewählt ist, die aus Aluminiumoxinitrid, Siliziumaluminiumoxinitrid und Aluminiumtitanat bestehen, und daß die Schicht aus hitzebeständigem Fasermaterial aus einem Gewebe (5,15), Gewirk oder filzartigen Material (10) aus Metallfasern mit einem Durchmesser zwischen 5 und 50 Mikrometer besteht.

2. Vorrichtung nach Anspruch 1, dadurch gekennzeichnet, daß das Gewebe (5,15), Gewirk oder filzartige Material (10) aus Fasern aus einer Eisen-Nickel-Chrom-Legierung besteht.

3. Vorrichtung nach Anspruch 1, dadurch gekennzeichnet, daß das Gewebe (5,15), Gewirk oder filzartige Material (10) aus Fasern aus einer Nickel-Chrom-Legierung besteht.

4. Vorrichtung nach einem der voraufgehenden Ansprüche, dadurch gekennzeichnet, daß die Schicht aus Fasermaterial (5,10,15) in Richtung senkrecht zu ihrer Flächenausdehnung einen Wärmedurchgangswiderstand gleich oder größer als 10⁻³ m²·K·W⁻¹ aufweist.

5. Vorrichtung nach einem der voraufgehenden Ansprüche, dadurch gekennzeichnet, daß das filzartige Material (10) aus zusammengesinterten Metallfasern besteht und eine Porosität von mehr als 60 % und vorzugsweise von mehr als 80 % aufweist.

6. Vorrichtung nach einem der voraufgehenden Ansprüche, dadurch gekennzeichnet, daß der Überzug aus keramischem Material eine Dicke von 50 bis 300 Mikrometern, und vorzugsweise von 50 bis 100 Mikrometern aufweist, wenn er nicht auf einer Schicht aus hitzebeständigem Fasermaterial aufgebracht ist.

7. Vorrichtung nach einem der voraufgehenden Ansprüche, dadurch gekennzeichnet, daß der Überzug aus keramischem Material durch ein Plasmaspritzverfahren oder ein Flammspritzverfahren aufgebracht ist.

8. Vorrichtung nach einem der voraufgehenden Ansprüche, gekennzeichnet durch einen Überzug aus durch Magnesiumoxid, Calciumoxid oder Yttriumoxid stabilisiertem Zirkondioxid.

9. Vorrichtung nach einem der voraufgehenden Ansprüche, dadurch gekennzeichnet, daß die Schicht aus keramischem Material auf einer Zwischenschicht aus Nickel-Aluminium oder Nickel-Chrom-Aluminium angeordnet ist.

10. Vorrichtung nach einem der voraufgehenden Ansprüche, dadurch gekennzeichnet, daß nur diejenigen Teile der Werkzeuge, die mit einem mit einer Einbrennfarbe versehenen Teil der Glasscheibe in Berührung kommen, mit der Schicht aus keramischem Material versehen sind.

11. Vorrichtung nach Anspruch 10, dadurch gekennzeichnet, daß diejenigen Teile der Werkzeuge, die nicht mit der Schicht aus keramischem Material überzogen sind, mit einem Papier aus keramischen Fasern bedeckt sind.

12. Anwendung der Vorrichtung nach einem der Ansprüche 1 bis 11 beim Transport und/oder bei der Verformung von Glasscheiben, die einen mit dieser Vorrichtung in Berührung kommenden mit einer Einbrennfarbe versehenen Teil aufweisen.

## Claims

1. Device (1, 8, 14) serving for transporting and/or shaping of glass sheets heated to their softening temperature, the surface of which coming into contact with the glass sheets is directly covered with a ceramic material or with a layer of a refractory fibrous material (5, 10, 15) coated with a ceramic material; characterized in that the ceramic material is essentially chosen from among the ceramic groups constituted of aluminium oxynitride, silicon-aluminium oxynitride, aluminium titanate and the zirconias, for the case of a covering with a layer of a refractory fibrous material, and for the case of a direct coating, from among the group constituted of aluminium oxynitride, silicon-aluminium oxynitride and aluminium titanate, and in that said layer of refractory fibrous material is formed of a woven (5, 15), knitted or felted material (10) of metallic fibres having a diameter of from 5 to 50 microns.

2. Device according to Claim 1, characterized in that the woven (5, 15), knitted or felted material (10) is constituted of fibres of iron-nickel-chrome alloy.

3. Device according to Claim 1, characterized in that the woven (5, 15), knitted or felted material (10) is constituted of fibres of nickel-chrome alloy.

4. Device according to one of the preceding Claims, characterized in that the layer of fibrous material (5, 10, 15) has, in a direction perpendicular to its plane of expansion, a thermal resistance greater than or equal to 10⁻³m².K.W⁻¹.

5. Device according to one of the preceding Claims, characterized in that the felted material (10) is composed of fritted metallic fibres and has a porosity exceeding 60% and preferably exceeding 80%.

6. Device according to one of the preceding Claims, characterized in that said coating of ceramic material has a thickness of between 50 and 300 microns and preferably between 50 and 100 microns if it is not deposited on a layer of a refractory fibrous material.

7. Device according to one of the preceding Claims, characterized in that said coating of ceramic material is deposited by a process of sputtering under plasma or a process of flame sputtering.

8. Device according to one of the preceding Claims, characterized by a coating of zirconia stabilized with magnesium oxide, calcium oxide or yttrium oxide.

9. Device according to one of the preceding Claims, characterized in that said layer of ceramic material is deposited on an underlying layer of a nickel-aluminium alloy or nickel-chrome-aluminium alloy.

10. Device according to one of the preceding Claims, characterized in that only those parts of the equipment that come into contact with an enamelled part of the glass sheet are covered with said layer of ceramic material.

11. Device according to Claim 10, characterized in that the parts of the equipment not covered with said layer of ceramic material are covered with a paper of ceramic fibres.

12. Application of the device according to one of Claims 1 to 11 to the transporting and/or shaping of glass sheets having an enamelled portion coming into contact with said device.
